# EUROPÄISCHE PATENTANMELDUNG

(11) **EP 1 852 564 A2**
(43) Veröffentlichungstag der Anmeldung: **07.11.2007**
(21) Anmeldenummer: 07105848.1
(22) Anmeldetag: 10.04.2007
(51) Int. Cl.: E04G 21/04, F16L 3/00

(54) **Schlauchhalter, insbesondere für Endschläuche an Betonverteilermasten**

(30) Priorität: 05.05.2006 DE 102006020928
(71) Anmelder: PUTZMEISTER Aktiengesellschaft, 72631 Aichtal (DE)
(72) Erfinder: Junghans, Karl-Heinz, 70794 Filderstadt (DE)
(74) Vertreter: Wolf, Eckhard

(57) **Zusammenfassung**

Die Erfindung betrifft einen Schlauchhalter, insbesondere für Endschläuche an Betonverteilermasten. Der Schlauchhalter weist einen randseitig im Bereich zweier Bügelschenkel (16,18) offenen Haltebügel (20) zur Aufnahme eines Endschlauchs sowie einen am Öffnungsrand (22) des einen Bügelschenkels (16) angelenkten zweiarmigen Sicherungshebel (26) auf. Der erste Hebelarm (28) des Sicherungshebels greift von der Anlenkstelle (24) aus mit einer äußeren Einführschräge (30) und einer inneren Anschlagfläche (32) in das Bügelinnere ein. Der zweite Hebelarm (34) übergreift von der Anlenkstelle (24) aus den einen Bügelschenkel (16) außenseitig und liegt unter der Einwirkung der Schwerkraft und/oder einer Federkraft gegen diesen außenseitig an, während der erste Hebelarm (28) die Randöffnung teilweise übergreift. Der Sicherungshebel (26) ist über die Einführschräge (30) des ersten Hebelarms (28) beim Einführen des Endschlauchs (14) oder von Hand über den zweiten Hebelarm (34) entgegen der Schwer- und/oder Federkraft unter Freigabe der Randöffnung des Haltebügels (20) für den Durchtritt des Endschlauchs (14) begrenzt verschwenkbar.

## Beschreibung

Die Erfindung betrifft einen Schlauchhalter, insbesondere für Endschläuche an Betonverteilermasten, mit einem randseitig im Bereich zweier Bügelschenkel offenen Haltebügel zur Aufnahme eines Endschlauchs und mit einem am Öffnungsrand des einen Bügelschenkels angelenkten zweiarmigen Sicherungshebel. Schlauchhalter dieser Art werden beispielsweise am Endarm eines Betonverteilermasts zur Aufnahme eines Endschlauchs im Transportzustand des Verteilermasts eingesetzt. Sie haben die Aufgabe, den Endschlauch in seiner zum Endarm parallelen Transportlage festzuhalten und bei Bedarf in seine am Endarm pendelnd nach unten hängende Betonierlage freizugeben.

Da im zusammengeklappten Zustand des Betonverteilermasts nur wenig Platz für die Unterbringung von Schlauchhaltern verbleibt, ist darauf zu achten, dass der zweiarmige Sicherungshebel in allen seinen Hebelstellungen nur wenig über den Haltebügel übersteht.

Zur Lösung dieser Aufgabe ist die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung wird vor allem darin gesehen, dass der erste Hebelarm des Sicherungshebels von der Anlenkstelle aus mit einer äußeren Einführschräge und einer inneren Anschlagfläche in das Bügelinnere eingreift und dass der zweite Hebelarm von der Anlenkstelle aus den einen Bügelschenkel außenseitig übergreift und unter der Einwirkung der Schwerkraft und/oder einer Federkraft gegen diesen außenseitig anliegt, während der erste Hebelarm die Randöffnung teilweise übergreift, wobei der Sicherungshebel über die Einführschräge des ersten Hebelarms beim Einführen des Endschlauchs oder von Hand über den zweiten Hebelarm entgegen der Schwer- und/oder Federkraft unter Freigabe der Randöffnung des Haltebügels für den Durchtritt des Endschlauchs begrenzt verschwenkbar ist. Die erfindungsgemäße innere Anschlagfläche am ersten Hebelarm sorgt dafür, dass der im Transportzustand sich im Haltebügel befindliche Endschlauch nicht versehentlich aus dem Haltebügel herausgelangen kann. Zur Freigabe des Endschlauchs wird der Sicherungshebel über den zweiten Hebelarm entgegen der Schwer- und/oder Federkraft verschwenkt.

Besonders wenig Platz braucht der Sicherungshebel, wenn der zweite Hebelarm unter der Einwirkung der Schwer- und/oder Federkraft im Wesentlichen parallel zum einen Bügelschenkel ausgerichtet ist. Eine weitere Verbesserung in dieser Hinsicht wird dadurch erzielt, wenn der Sicherungshebel eine zum Haltebügel hin randoffene Tasche aufweist, die den einen Bügelschenkel zumindest partiell umgreift. Ein zu weites Ausschwenken des Sicherungshebels aus seiner Ruhelage wird dadurch vermieden, dass im Abstand von der Anlenkstelle an dem einen Bügelschenkel mindestens ein in eine Langlochführung des Sicherungshebels eingreifender Führungsbolzen angeordnet ist und wenn der Schwenkweg des Sicherungshebels durch zwei gegen den Führungsbolzen anschlagende Endanschläge in der Langlochführung begrenzt ist.

Eine bevorzugte Ausgestaltung der Erfindung sieht vor, dass zwischen dem einen Bügelschenkel und dem Sicherungshebel eine Blattfeder eingespannt ist. Die Blattfeder ist dabei zweckmäßig mit ihrem einen Ende an dem einen Bügelschenkel fixiert und liegt mit ihrem anderen Ende gegen mindestens einen am Sicherungshebel angeordneten Mitnehmer an.

Eine weitere bevorzugte Ausgestaltung der Erfindung sieht vor, dass der Sicherungshebel überwiegend aus Stanz- und Biegeteilen aus Blech zusammengesetzt ist. Die Blattfeder ist dabei zweckmäßig innerhalb der den Sicherungshebel bildenden Tasche angeordnet, während der Mitnehmer innerhalb der Tasche gegen die Blattfeder anliegt. Die Hauptrichtungen der beiden Hebelarme des Sicherungshebels schließen zweckmäßig von der Anlenkstelle aus einen spitzen Winkel miteinander ein.

Eine weitere vorteilhafte Ausgestaltung der Erfindung sieht vor, dass der Haltebügel eine U-förmig gebogene Aufnahmepartie für den Endschlauch sowie eine am einen Bügelschenkel schräg nach außen überstehende, die Anlenkstelle aufweisende Randpartie aufweist. Weiter ist zweckmäßig eine außenseitig über die Randpartie des Bügelschenkels überstehende Konsole vorgesehen, an welcher die Blattfeder mit ihrem einen Ende fixiert ist. An seinem zweiten Bügelschenkel weist der Haltebügel zweckmäßig eine randseitige, zur Bügelöffnung geneigte Einführschräge für den Endschlauch sowie gegebenenfalls einen nach dem Bügeläußeren überstehenden Montageausleger auf.

Die Erfindung bezieht sich außerdem auf eine Autobetonpumpe mit einem als Träger für eine Betonförderleitung ausgebildeten, aus mehreren Mastarmen zusammengesetzten Knickmast, dessen Förderleitung im Bereich des Endarms einen Endschlauch trägt und bei welchem der Endarm des Knickmasts mindestens zwei im Abstand voneinander angeordnete erfindungsgemäße Schlauchhalter zur Aufnahme des Endschlauchs trägt. Vorteilhafterweise sind die erfindungsgemäßen Schlauchhalter mit ihren Montageauslegern am Endarm des Knickmasts fixiert.

Im Folgenden wird die Erfindung anhand eines in der Zeichnung in schematischer Weise dargestellten Ausführungsbeispiels näher erläutert. Es zeigen
- Fig. 1a: bis c eine Seitenansicht, eine Draufsicht und eine Stirnseitenansicht eines Schlauchhalters für einen Endschlauch des Betonverteilermasts einer Autobetonpumpe teilweise im Schnitt;
- Fig. 2: eine schaubildliche Darstellung des Schlauchhalters nach Fig. 1a bis c;
- Fig. 3a: und b eine Seitenansicht und eine Stirnseitenansicht des Haltebügels eines Schlauchhalters nach Fig. 2;
- Fig. 4: einen Schnitt entlang der Schnittlinie lV-lV der Fig. 3a;
- Fig. 5a: bis c eine Stirnseitenansicht, eine Draufsicht und eine Seitenansicht des Schwenkhebels für den Schlauchhalter nach Fig. 1a bis c;
- Fig. 6: eine schaubildliche Darstellung des Schwenkhebels nach Fig. 5a bis c.

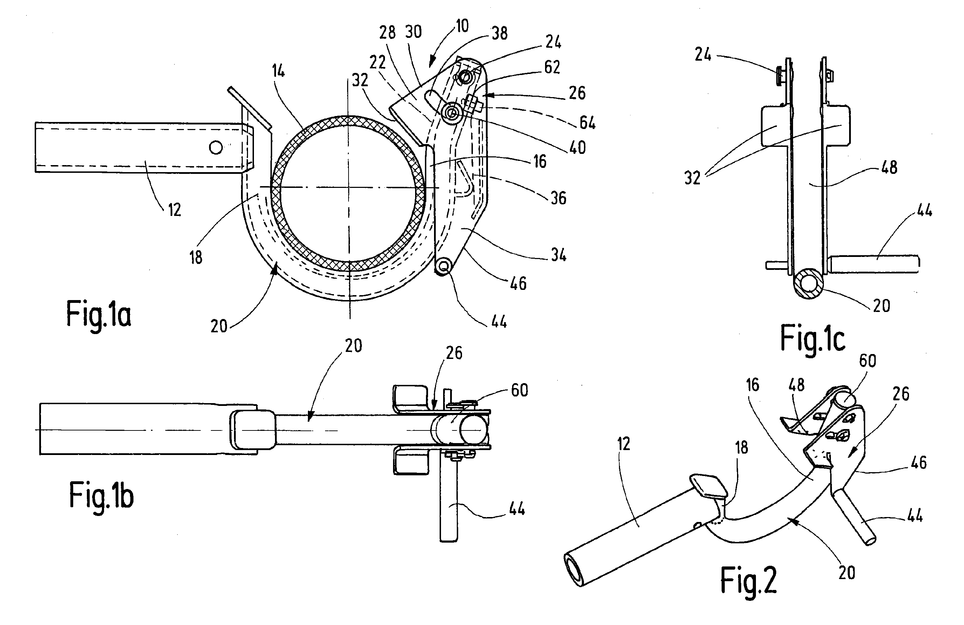

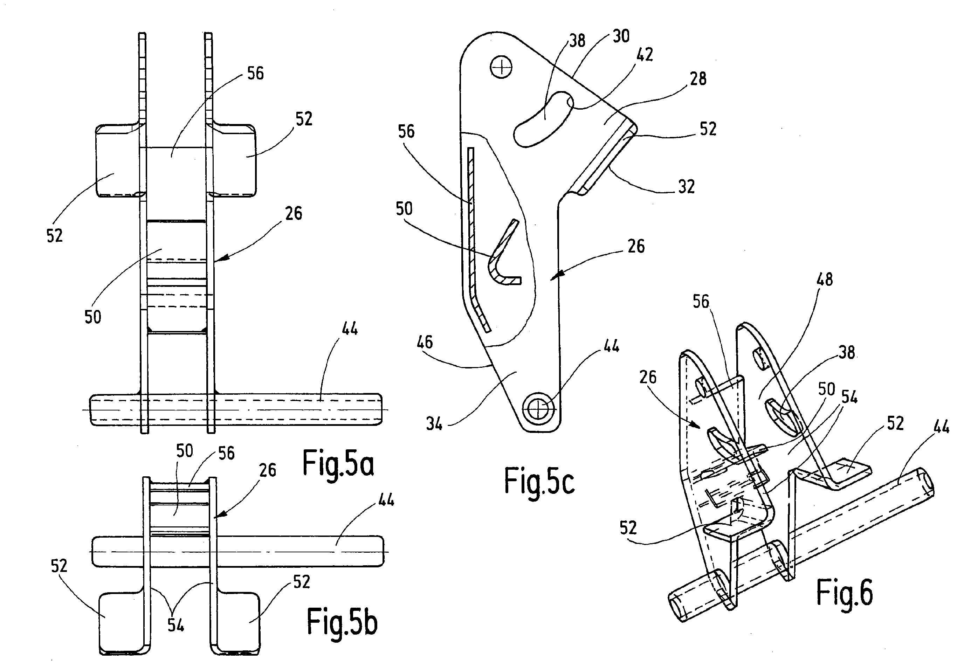

Der in der Zeichnung dargestellte Schlauchhalter ist zur Montage am Endarm eines Betonverteilermasts bestimmt, der als Träger für eine Betonförderleitung ausgebildet ist. Üblicherweise werden zwei der Schlauchhalter 10 am Endarm des aus mehreren Mastarmen zusammengesetzten Knickmasts im Abstand voneinander mit ihren Montageauslegern 12 fixiert, die dort im zusammengeklappten Transportzustand des Knickmasts zur Aufnahme des am Ende der Förderleitung im Bereich des Endarms angelenkten Endschlauchs 14 bestimmt sind. Der Schlauchhalter weist zu diesem Zweck einen randseitig im Bereich zweier Bügelschenkel 16,18 offenen Haltebügel 20 zur Aufnahme des Endschlauchs 14 sowie einen am Öffnungsrand 22 des einen Bügelschenkels 16 über einen Achsbolzen 24 angelenkten zweiarmigen Sicherungshebel 26 auf. Der eine Hebelarm 28 des Sicherungshebels 26 greift von der Anlenkstelle 24 aus mit einer äußeren Einführschräge 30 und einer inneren Anschlagfläche 32 in das Bügelinnere ein. Der zweite Hebelarm 34 übergreift den Bügelschenkel 16 außenseitig und liegt gegen diesen unter der Einwirkung der Schwerkraft und/oder der Kraft einer beispielsweise als Blattfeder ausgebildeten Feder 36 außenseitig an, während der erste Hebelarm 28 die Randöffnung des Haltebügels teilweise übergreift. Der Sicherungshebel 26 ist dabei über die Einführschräge 30 des ersten Hebelarms 28 beim Einführen des Endschlauchs 14 oder von Hand über den zweiten Hebelarm 34 entgegen der Schwer- und/oder Federkraft unter Freigabe der Randöffnung des Haltebügels 20 für den Durchtritt des Endschlauchs 14 begrenzt verschwenkbar. Im Abstand von der Anlenkstelle (Achsbolzen 24) sind an dem einen Bügelschenkel 16 zwei in je eine Langlochführung 38 des Sicherungshebels 26 eingreifende Führungsbolzen 40 angeordnet. Die beiden Langlochführungen 38 bilden zueinander konzentrische Kreissegmente, deren Mittelpunkte durch die Achsbolzen 24 definiert sind. Die Schwenkbewegung des Sicherungshebels 26 ist durch Endanschläge an den Enden der Langlochführung 38 begrenzt. An einem der Endanschläge ist der zweite Hebelarm 34 unter der Einwirkung der Schwer- und/oder Federkraft im Wesentlichen parallel zum einen Bügelschenkel 16 ausgerichtet (Fig. 1a). In dieser Lage versperrt der erste Hebelarm 28 mit seiner Anschlagfläche 32 die Randöffnung des Haltebügels 20. Zum Öffnen der Randöffnung kann der Sicherungshebel 26 an einem Handgriff 44 erfasst werden, der am Ende des zweiten Hebelarms 34 angeordnet und parallel zu der durch die Achsbolzen 24 definierten Anlenkachse ausgerichtet ist. Wie insbesondere aus den Fig. 1a und 5c zu ersehen ist, schließen die Hauptrichtungen der beiden Hebelarme 28,34 von der Anlenkstelle 24 aus einen spitzen Winkel miteinander ein. Außerdem weist der zweite Hebelarm 34 eine zu seinem den Handgriff 44 tragenden Ende hin verlaufende außenseitige Schräge 46 auf, die dafür sorgt, dass er vor allem im eingeschwenkten Zustand nur wenig Platz beansprucht.

Wie vor allem aus den Fig. 5a bis 6 zu ersehen ist, ist der Sicherungshebel 26 überwiegend aus Stanz- und Biegeteilen aus Blech zusammengesetzt. Er bildet eine zum Haltebügel 20 hin randoffene Tasche 48, die den einen Bügelschenkel 16 partiell umgreift. Die Blattfeder 36 ist dabei ebenso wie ihr am zweiten Hebelarm 34 angeordneter Mitnehmer 50 innerhalb der Tasche 48 angeordnet. Die Anschlagfläche 32 ist durch zwei Laschen 52 definiert, die im Bereich des ersten Hebelarms 28 an den betreffenden Blechteilen 54 des Sicherungshebels 26 seitlich nach außen gebogen sind. Am Taschenrücken sind die Blechteile 54 des Sicherungshebels 26 auf der Seite des zweiten Hebelarms 34 Verbindungswand 56 miteinander verbunden.

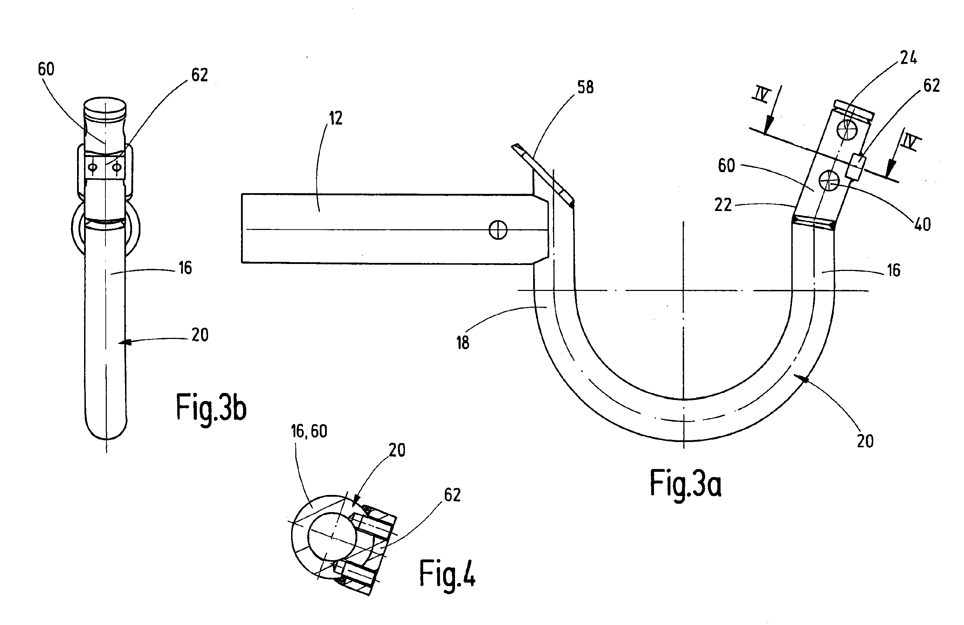

Der Bügelschenkel 16 trägt an seiner freien, schräg nach außen abgebogenen Randpartie 60 eine nach außen überstehende Konsole 62, an der die Blattfeder 36 mit ihrem einen Ende mittels Schrauben 64 fixiert ist (Fig. 3a, 3b, 4 und Fig. 1a).

Der dem Sicherungshebel 26 gegenüberliegende Bügelschenkel 16 trägt an seinem freien Ende eine randseitige, zur Bügelöffnung geneigte Einführschräge 58. Außerdem ist in diesem Bereich der senkrecht nach außen überstehende Montageanlieger 12 angeschweißt.

Zusammenfassend ist folgendes festzuhalten: Die Erfindung betrifft einen Schlauchhalter, insbesondere für Endschläuche an Betonverteilermasten. Der Schlauchhalter weist einen randseitig im Bereich zweier Bügelschenkel 16,18 offenen Haltebügel 20 zur Aufnahme eines Endschlauchs sowie einen am Öffnungsrand 22 des einen Bügelschenkels 16 angelenkten zweiarmigen Sicherungshebel 26 auf. Der erste Hebelarm 28 des Sicherungshebels greift von der Anlenkstelle 24 aus mit einer äußeren Einführschräge 30 und einer inneren Anschlagfläche 32 in das Bügelinnere ein. Der zweite Hebelarm 34 übergreift von der Anlenkstelle 24 aus den einen Bügelschenkel 16 außenseitig und liegt unter der Einwirkung der Schwerkraft und/oder einer Federkraft gegen diesen außenseitig an, während der erste Hebelarm 28 die Randöffnung teilweise übergreift. Der Sicherungshebel 26 ist über die Einführschräge 30 des ersten Hebelarms 28 beim Einführen des Endschlauchs 14 oder von Hand über den zweiten Hebelarm 34 entgegen der Schwerund/oder Federkraft unter Freigabe der Randöffnung des Haltebügels 20 für den Durchtritt des Endschlauchs 14 begrenzt verschwenkbar.

## Patentansprüche

1. Schlauchhalter, insbesondere für Endschläuche an Betonverteilermasten, mit einem randseitig im Bereich zweier Bügelschenkel (16,18) offenen Haltebügel (20) zur Aufnahme eines Endschlauches (14) und mit einem am Öffnungsrand (22) des einen Bügelschenkels (16) angelenkten zweiarmigen Sicherungshebel (26), dessen erster Hebelarm (28) von der Anlenkstelle (24) aus mit einer äußeren Einführschräge (30) und einer inneren Anschlagfläche (32) in das Bügelinnere eingreift, und dessen zweiter Hebelarm (34) von der Anlenkstelle (24) aus den einen Bügelschenkel (16) außenseitig übergreift und unter der Einwirkung der Schwerkraft und/oder einer Federkraft gegen diesen außenseitig anliegt, während der erste Hebelarm (28) die Randöffnung teilweise übergreift, wobei der Sicherungshebel (26) über die Einführschräge (30) des ersten Hebelarms (28) beim Einführen des Endschlauchs (14) oder von Hand über den zweiten Hebelarm (34) entgegen der Schwerund/oder Federkraft unter Freigabe der Randöffnung des Haltebügels (20) für den Durchtritt des Endschlauchs (14) begrenzt verschwenkbar ist.

2. Schlauchhalter nach Anspruch 1, **dadurch gekennzeichnet, dass** der zweite Hebelarm (34) unter der Einwirkung der Schwer- und/oder Federkraft im Wesentlichen parallel zum einen Bügelschenkel (16) ausgerichtet ist.

3. Schlauchhalter nach Anspruch 1 oder 2, **dadurch gekennzeichnet, dass** im Abstand von der Anlenkstelle (24) an dem einen Bügelschenkel (16) mindestens ein in eine Langlochführung (38) des Sicherungshebels (26) eingreifender Führungsbolzen (40) angeordnet ist.

4. Schlauchhalter nach Anspruch 3, **dadurch gekennzeichnet, dass** die Langlochführung (38) durch zwei gegen den Führungsbolzen (40) anschlagende Endanschläge (42) begrenzt ist.

5. Schlauchhalter nach einem der Ansprüche 1 bis 4, **dadurch gekennzeichnet, dass** zwischen dem einen Bügelschenkel (16) und dem Sicherungshebel (26) eine Blattfeder (36) eingespannt ist.

6. Schlauchhalter nach Anspruch 5, **dadurch gekennzeichnet, dass** die Blattfeder (36) mit ihrem einen Ende an dem einen Bügelschenkel (16) fixiert ist und mit ihrem anderen Ende gegen mindestens einen am Sicherungshebel (26) angeordneten Mitnehmer (50) anliegt.

7. Schlauchhalter nach einem der Ansprüche 1 bis 6, **dadurch gekennzeichnet, dass** der Sicherungshebel (26) überwiegend aus Stanz- und Biegeteilen aus Blech zusammengesetzt ist.

8. Schlauchhalter nach einem der Ansprüche 1 bis 7, **dadurch gekennzeichnet, dass** der Haltebügel (20) eine U-förmig gebogene Aufnahmepartie für den Endschlauch (14) sowie eine am einen Bügelschenkel (16) schräg nach außen überstehende, die Anlenkstelle (24) aufweisende Randpartie (60) aufweist.

9. Schlauchhalter nach Anspruch 8, **gekennzeichnet durch** eine außenseitig über die Randpartie (60) des einen Bügelschenkels (16) überstehende Konsole (62), an welcher die Blattfeder (36) mit ihrem einen Ende fixiert ist.

10. Schlauchhalter nach einem der Ansprüche 1 bis 9, **dadurch gekennzeichnet, dass** der Sicherungshebel (26) eine zum Haltebügel (20) hin randoffene Tasche (48) aufweist, die den einen Bügelschenkel (16) zumindest partiell umgreift.

11. Schlauchhalter nach Anspruch 10, **dadurch gekennzeichnet, dass** die Blattfeder (36) innerhalb der Tasche (48) angeordnet ist.

12. Schlauchhalter nach Anspruch 10 oder 11, **dadurch gekennzeichnet, dass** der Mitnehmer (50) innerhalb der Tasche (48) gegen die Blattfeder (36) anschlägt.

13. Schlauchhalter nach einem der Ansprüche 1 bis 12, **dadurch gekennzeichnet, dass** der zweite Hebelarm (34) des Sicherungshebels (26) an seinem freien Ende einen vorzugsweise parallel zur Anlenkachse ausgerichteten Handgriff (44) trägt.

14. Schlauchhalter nach einem der Ansprüche 1 bis 13, **dadurch gekennzeichnet, dass** die Hauptrichtungen der beiden Hebelarme (28,34) des Sicherungshebels (26) von der Anlenkstelle (24) aus einen spitzen Winkel miteinander einschließen.

15. Schlauchhalter nach einem der Ansprüche 1 bis 14, **dadurch gekennzeichnet, dass** der Haltebügel (20) an seinem zweiten Bügelschenkel (18) eine randseitige, zur Bügelöffnung geneigte Einführschräge (30) aufweist.

16. Schlauchhalter nach einem der Ansprüche 1 bis 15, **dadurch gekennzeichnet, dass** der Haltebügel (20) an seinem zweiten Bügelschenkel (18) einen nach dem Bügeläußeren überstehenden Montageausleger (12) trägt.

17. Autobetonpumpe mit einem als Träger für eine Betonförderleitung ausgebildeten, aus mehreren Mastarmen zusammengesetzten Knickmast, dessen Förderleitung im Bereich des Endarms einen Endschlauch trägt und bei welchem der Endarm des Knickmasts mindestens zwei im Abstand voneinander angeordnete Schlauchhalter (10) nach einem der Ansprüche 1 bis 16 zur Aufnahme des Endschlauchs (14) trägt.

18. Autobetonpumpe nach Anspruch 17, **dadurch gekennzeichnet, dass** die Schlauchhalter (10) mit den Montageauslegern (12) am Endarm des Knickmasts fixiert sind.
